(19) Europäisches Patentamt
European Patent Office
Office européen des brevets

(11) **EP 4 109 341 B1**

(12) **EUROPEAN PATENT SPECIFICATION**

(45) Date of publication and mention
of the grant of the patent:
**31.07.2024 Bulletin 2024/31**

(21) Application number: **22179812.7**

(22) Date of filing: **20.06.2022**

(51) International Patent Classification (IPC):
$G06N\ 3/045^{(2023.01)}$    $G06N\ 3/063^{(2023.01)}$
$G06F\ 7/544^{(2006.01)}$    $G06F\ 17/16^{(2006.01)}$
$G06F\ 9/30^{(2018.01)}$

(52) Cooperative Patent Classification (CPC):
**G06N 3/063; G06F 7/5443; G06F 9/30025;
G06F 9/30036; G06F 17/16; G06N 3/045**

(54) **METHOD WITH PARTIAL SUM COMPRESSION**

**VERFAHREN MIT PARTIELLER SUMMENKOMPRESSION**

**PROCÉDÉ AVEC COMPRESSION DE SOMME PARTIELLE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.06.2021 US 202163214173 P
19.08.2021 US 202117407150**

(43) Date of publication of application:
**28.12.2022 Bulletin 2022/52**

(73) Proprietor: **Samsung Electronics Co., Ltd.
Gyeonggi-do, 16677 (KR)**

(72) Inventors:
• **LI, Ling
Sunnyvale, CA 94085 (US)**
• **SHAFIEE ARDESTANI, Ali
Santa Clara, CA 95051 (US)**

(74) Representative: **Kuhnen & Wacker
Patent- und Rechtsanwaltsbüro PartG mbB
Prinz-Ludwig-Straße 40A
85354 Freising (DE)**

(56) References cited:
**US-A1- 2020 264 876**

• **AMIR GHOLAMI ET AL: "A Survey of Quantization
Methods for Efficient Neural Network Inference",
ARXIV.ORG, CORNELL UNIVERSITY LIBRARY,
201 OLIN LIBRARY CORNELL UNIVERSITY
ITHACA, NY 14853, 22 April 2021 (2021-04-22),
XP081930551**
• **MARC ORTIZ ET AL: "Low-Precision
Floating-Point Schemes for Neural Network
Training", ARXIV.ORG, CORNELL UNIVERSITY
LIBRARY, 201 OLIN LIBRARY CORNELL
UNIVERSITY ITHACA, NY 14853, 14 April 2018
(2018-04-14), XP080870850**
• **ANONYMOUS: "Floating-point arithmetic -
Wikipedia", 26 May 2016 (2016-05-26),
XP055390118, Retrieved from the Internet
<URL:https://en.wikipedia.org/w/index.php?title
=Floating-point_arithmetic&oldid=722188619#A
ddition_and_subtraction> [retrieved on
20170712]**

## Description

### FIELD

One or more aspects of embodiments according to the present disclosure relate to neural network processing, and more particularly to a system and computer-implemented method for encoding partial sums

### BACKGROUND

In an artificial neural network, certain operations, such as calculating a convolution, may involve calculating partial sums and subsequently summing the partial sums. These operations may be burdensome for a processing circuit performing them, both in terms of storage requirements for the partial sums, and in terms of bandwidth used to move the partial sums to and from storage.

Thus, there is a need for an improved system and method for performing neural network calculations.

US 2020/264876 A1 discloses: Apparatus and methods for training a neural network accelerator using quantized precision data formats, and, in particular, for adjusting floating-point formats used to store activation values during training. A computing system includes processors, memory, and a floating-point compressor in communication with the memory. The computing system is configured to produce a neural network comprising activation values expressed in a first floating-point format, select a second floating-point format for the neural network based on a performance metric, convert at least one of the activation values to the second floating-point format, and store the compressed activation values in the memory. The number of bits used to express mantissas, exponent format, use of non-uniform mantissas, and use of outlier values to express some of the mantissas can be adjusted.

AMIR GHOLAMI ET AL: "A Survey of Quantization Methods for Efficient Neural Network Inference", ARXIV.ORG, CORNELL UNIVERSITY LIBRARY, 201 OLIN LIBRARY CORNELL UNIVERSITY ITHACA, NY 14853, 22 April 2021 (2021-04-22), XP081930551, discusses quantization methods for efficient neural network inference.

### SUMMARY

The invention is set out in the independent claims. Embodiments of the invention are set out in the appended claims

According to an embodiment, there is provided a computer-implemented method, including: performing a neural network inference operation, the performing of the neural network inference operation including: calculating a first plurality of products, each of the first plurality of products being the product of a weight and an activation; calculating a first partial sum, the first partial sum being the sum of the products; and compressing the first partial sum to form a first compressed partial sum. The first compressed partial sum includes an exponent and a mantissa. The first partial sum is an integer, and the exponent is an n-bit integer equal to $2^n-1$ less an exponent difference, the exponent difference being the difference between: the bit position of the leading 1 in a limit number, and the bit position of the leading 1 in the first partial sum.

According to an embodiment, there is provided a system, including: a processing circuit configured to perform a neural network inference operation, the performing of the neural network inference operation including: calculating a first plurality of products, each of the first plurality of products being the product of a weight and an activation; calculating a first partial sum, the first partial sum being the sum of the products; and compressing the first partial sum to form a first compressed partial sum. The first compressed partial sum includes an exponent and a mantissa. The first partial sum is an integer, and the exponent is an n-bit integer equal to $2^n-1$ less an exponent difference, the exponent difference being the difference between: the bit position of the leading 1 in a limit number, and the bit position of the leading 1 in the first partial sum.

### BRIEF DESCRIPTION OF THE DRAWINGS

These and other features and advantages of the present disclosure will be appreciated and understood with reference to the specification, claims, and appended drawings wherein:

> FIG. 1A is a block diagram of a portion of a processing circuit, according to an embodiment of the present disclosure;
> FIG. 1B is a data flow diagram, according to an embodiment of the present disclosure;
> FIG. 1C is a data flow diagram, according to an embodiment of the present disclosure;
> FIG. 1D is a data flow diagram, according to an embodiment of the present disclosure;
> FIG. 1E is a bit function diagram, according to an embodiment of the present disclosure;
> FIG. 1F is a bit function and value table, according to an embodiment of the present disclosure;
> FIG. 1G is a bit function and value table, according to an embodiment of the present disclosure;
> FIG. 1H is a bit function and value table, according to an embodiment of the present disclosure;
> FIG. 1I is a data size mapping table, according to an embodiment of the present disclosure;
> FIG. 1J is an encoding diagram, according to an embodiment of the present disclosure;
> FIG. 1K is a bit function and value table, according to an embodiment of the present disclosure;
> FIG. 1L is a set of bit function and value tables, according to an embodiment of the present disclosure;

FIG. 2A is a table of encoding methods, according to an embodiment of the present disclosure;

FIG. 2B is a table of encoding methods, according to an embodiment of the present disclosure;

FIG. 3A is a graph of performance results, according to an embodiment of the present disclosure;

FIG. 3B is a table of performance results, according to an embodiment of the present disclosure;

FIG. 3C is a table of performance results, according to an embodiment of the present disclosure;

FIG. 3D is a table of performance results, according to an embodiment of the present disclosure;

FIG. 3E is a graph of performance results, according to an embodiment of the present disclosure;

FIG. 3F is a table of performance results, according to an embodiment of the present disclosure;

FIG. 3G is a table of performance results, according to an embodiment of the present disclosure;

FIG. 4A is a graph of performance results, according to an embodiment of the present disclosure;

FIG. 4B is a table of performance results, according to an embodiment of the present disclosure;

FIG. 4C is a table of performance results, according to an embodiment of the present disclosure;

FIG. 4D is a table of performance results, according to an embodiment of the present disclosure;

FIG. 5A is a data flow diagram, according to an embodiment of the present disclosure;

FIG. 5B is a graph of performance results, according to an embodiment of the present disclosure;

FIG. 5C is a table of performance results, according to an embodiment of the present disclosure;

FIG. 5D is a table of performance results, according to an embodiment of the present disclosure; and

FIG. 5E is a table of performance results, according to an embodiment of the present disclosure.

## DETAILED DESCRIPTION

The detailed description set forth below in connection with the appended drawings is intended as a description of exemplary embodiments of a system and method for neural network processing provided in accordance with the present disclosure and is not intended to represent the only forms in which the present disclosure may be constructed or utilized. The description sets forth the features of the present disclosure in connection with the illustrated embodiments. As denoted elsewhere herein, like element numbers are intended to indicate like elements or features.

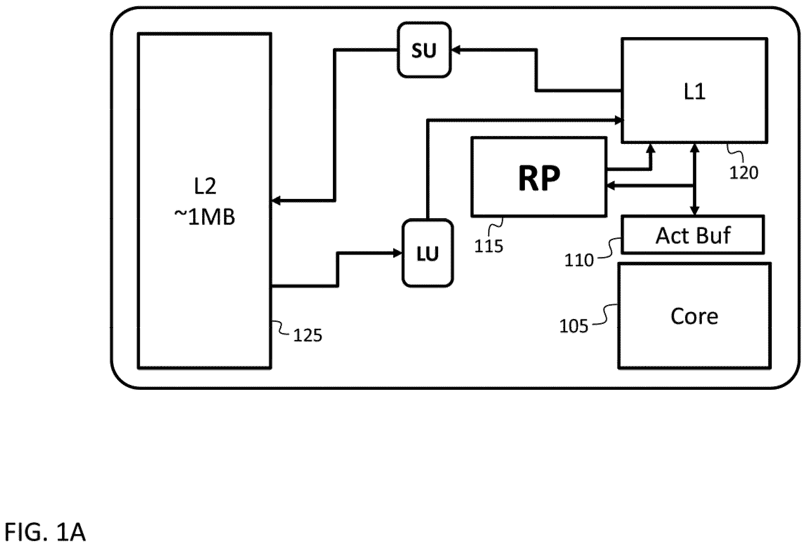

FIG. 1A shows a portion of a processing circuit configured to perform neural network inference operations involving convolutions. Activations (from an activation buffer 110) and weights are fed to a core 105, which multiplies each activation by a weight and returns the products to a return path 115. In the return path, the products may be summed to form partial sums and then stored in an L1 cache 120 or in an L2 cache 125 for later combination with other partial sums. Before being stored in the L1 cache 120 or in the L2 cache 125, the partial sums may be encoded, or "compressed", as discussed in further detail below, to reduce the bandwidth and storage space required for saving the partial sums.

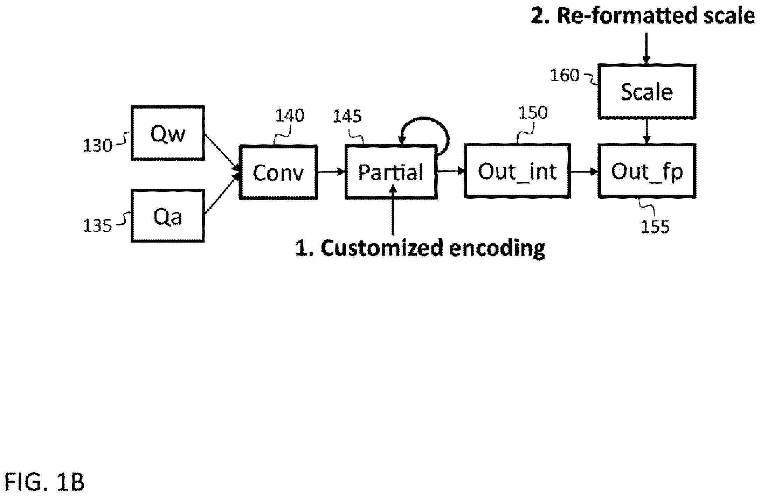

FIG. 1B is a data flow diagram showing a weight 130 multiplied by an activation 135 as a portion of a convolution operation 140. Partial sums are accumulated in a partial sum accumulation operation 145, which produces integer partial sums 150. These partial sums may be converted to a floating point representation 155, using a customized encoding method (which may also use a scale factor 160), as discussed in further detail below, to reduce the size, in bits, of each partial sum.

The input data, which may include (as mentioned above) a set of weights and a set of activations may originally be represented in floating point format. To enable more efficient multiplication operations, these floating point values may be converted to integers using a process referred to as quantization. A uniform, symmetric quantization process may be employed, although some embodiments described herein are applicable also to nonuniform and asymmetric quantization methods.

For activations and weights that are each 8-bit integers, the partial sums may in principle have a bit width of up to 31 bits. In practice, however, when the input data are images, for example, the distribution of values in the input data results in partial sums having a bit width of at most 21 bits (e.g., for ResNet50) or 19 bits (e.g., for MobileNet v2). As such, even if kept in integer form, it may not be necessary to use a 32 bit wide representation to store each partial sum as a number. Further (as discussed in further detail below), FP16 encoding, BF16 encoding, CP encoding (clipping partial sums to a fixed bit width) or PM encoding - partial sum encoding using a fixed number of most significant bits (MSB) may be employed.

In the FP16 representation, each number may be represented in the following representation:

$$(-1)^{sign} \times 2^{exp\,-15} \times 1.significandbits_2$$

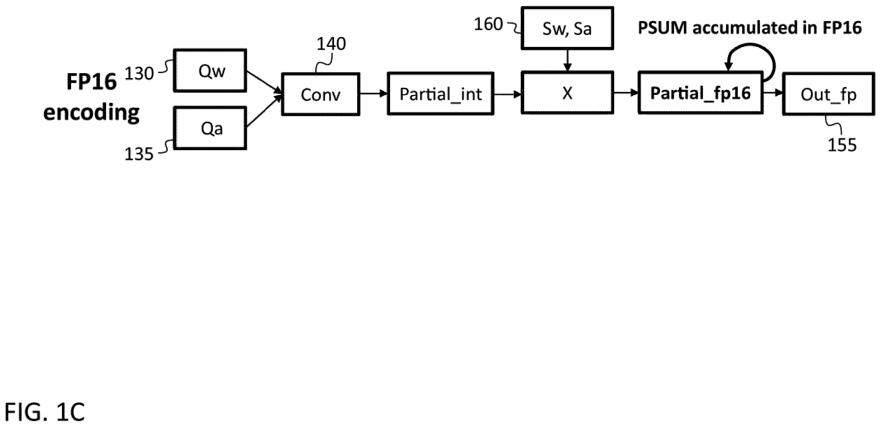

(where sign is the sign bit, exp is the exponent, and significandbits is the set of bits of the mantissa (or "significand") excluding the implicit leading 1), which does not accommodate the largest 19-bit (or 21-bit) integer. However, with suitable scaling, 19- and 21-bit integers may be represented using FP16. FIG. 1C shows a data flow for such an encoding, with the partial sum being accumulated after scaling of the products, using a weight scaling factor Sw and an activation scaling factor Sa, conversion of the products to FP16, and accumulation of the partial sum in the FP16 representation.

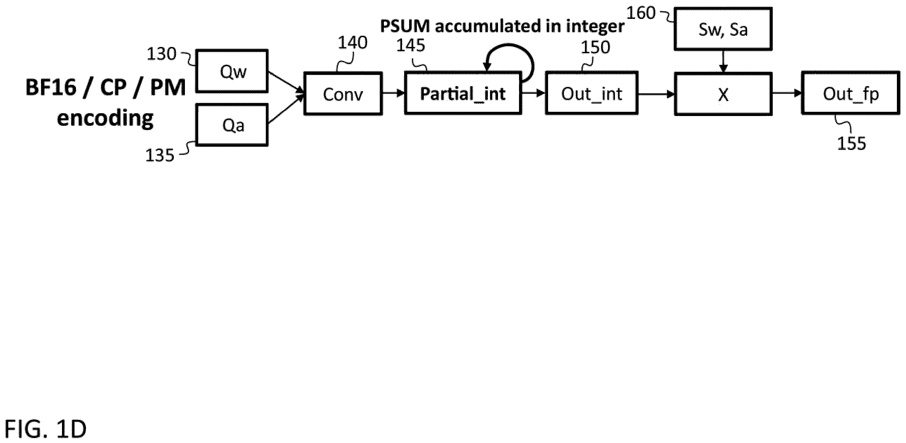

Other encoding methods, such as BF16 encoding, CP encoding, and PM encoding, may also be used (as mentioned above) to encode and compress the partial sums. FIG. 1D shows a data flow for such encoding methods, with the accumulation of the partial sum done using an integer representation, which may then be scaled and encoded to generate the encoded value.

The BF16 representation may represent each number as follows:

$$(-1)^{sign} \times 2^{(exp - 127)} \times 1.significandbits2$$

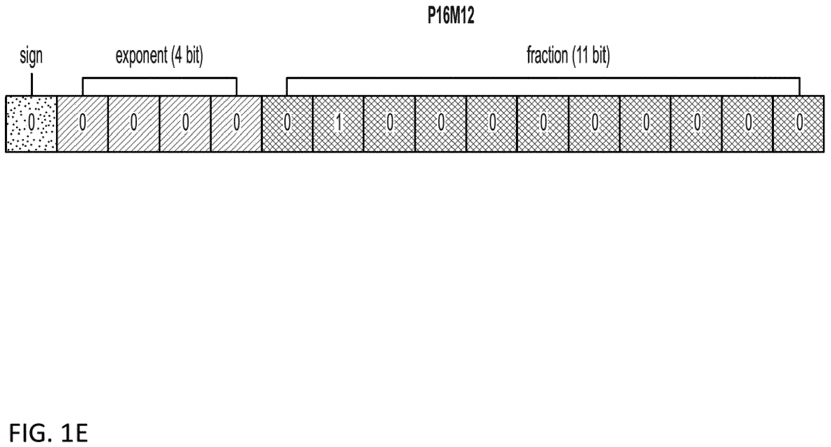

where sign is the sign bit, exp is the exponent, and significandbits2 is the set of bits of the mantissa excluding the implicit leading 1. BF may have the same exponent range as FP32, but the mantissa of BF16 may be shorter; as such, FP32 may be converted to BF16 by keeping the 7 most significant bits of the mantissa and discarding the 16 least significant bits. BF16 may have the same size as a P16M12 representation (illustrated in FIG. 1E), but BF16 may have more exponent bits (8 instead of 4) and fewer mantissa bits (7 instead of 11) than P16M12. As used herein, a PkMn representation (with, e.g., k = 16 and n = 12 in a P16M12 representation) is a representation with 1 sign bit, (k-n) exponent bits, and (n-1) bits storing the mantissa excluding the implicit leading 1 bit. As is discussed in further detail below, a P16M12 representation may use an exponent offset to make more efficient use of the exponent bits.

CP encoding may clip partial sums that do not fit within the allocated bit width to the largest number that fits within the allocated bit width, i.e., any number larger than the largest number capable of being represented is represented by the largest number capable of being represented. For example, for CP20, a total of 20 bits is available, of which one is the sign bit, which means that the maximum magnitude that can be represented is $2^{19}$ -1, and for CP19 the maximum magnitude that can be represented is $2^{18}$ -1. If the partial sum is the largest 21-bit integer, then the error, if this is encoded using CP20 encoding (and the magnitude is represented as the largest 20-bit integer), is $2^{19}$, and the error, if this is encoded using CP19 encoding (and the magnitude is represented as the largest 18-bit integer), is $1.5 \times 2^{19}$.

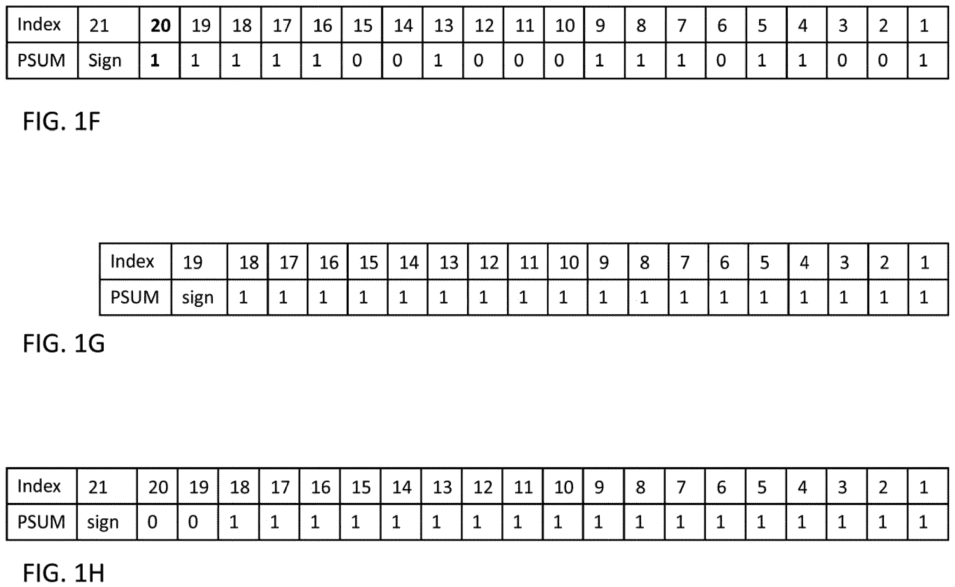

FIGs. 1F, 1G, and 1H show (i) an example of a 21-bit integer (in a sign and magnitude representation), having a sign bit in the 21st bit position, and a value of 1 in the leading (20th) bit position of the magnitude, (ii) the CP19 representation of this integer, and (iii) the result when the CP19 representation is converted back to the original 21-bit integer sign and magnitude representation. The errors introduced by the encoding (e.g., in the two most significant bits of the magnitude) may be seen by comparing FIGs. 1F and 1H.

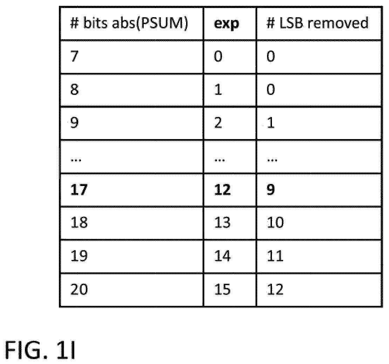

Encoding the partial sum using a P12M8 representation (which has a size of 12 bits) (to form a compressed partial sum) may reduce the size by more than a factor of 2, e.g., if the original partial sum is an integer in a 32-bit representation. The P12M8 encoding of an integer (e.g., of the magnitude of a partial sum) is formed based on the largest integer to be encoded, which is referred to herein as the "limit number" used for the encoding. The encoding is as follows. The four-bit exponent of the P12M8 representation is set equal to 15 (15 being equal to $2^n$-1 where n = 4 is the number of bits in the exponent, and 15 is the maximum unsigned integer capable of being stored in the 4-bit exponent) less an exponent difference, the exponent difference being the difference between the bit position of the leading 1 in the limit number, and the bit position of the leading 1 in the integer being encoded (e.g., the partial sum). The table of FIG. 1I illustrates this process. For a magnitude (abs(PSUM)) of a partial sum having a leading one in the 17th bit, for example, the exponent difference is 20 - 17 = 3, and the exponent is 15 - 3 = 12. Because 8 bits are available, in the P12M8 representation, for storing the mantissa (7 bits of which are stored explicitly in the P12M8 representation, and the leading 1 of which is stored as an implicit 1), the 9 least significant bits of the integer are discarded. This result is illustrated in the table of FIG. 1I, in the row containing the numbers 17 (the number of bits in the magnitude of the partial sum), 12 (the value of the exponent, in the P12M8 representation), and 9 (the number of least significant bits that are discarded, or "removed"). Numbers with a leading one that is in, or to the right of, the 11th bit are encoded with an exponent value of 7, and the entire magnitude of the integer (including the leading 1) is placed in the mantissa, or "fraction" portion of P12M8 representation (for such numbers the representation does not include an implicit 1).

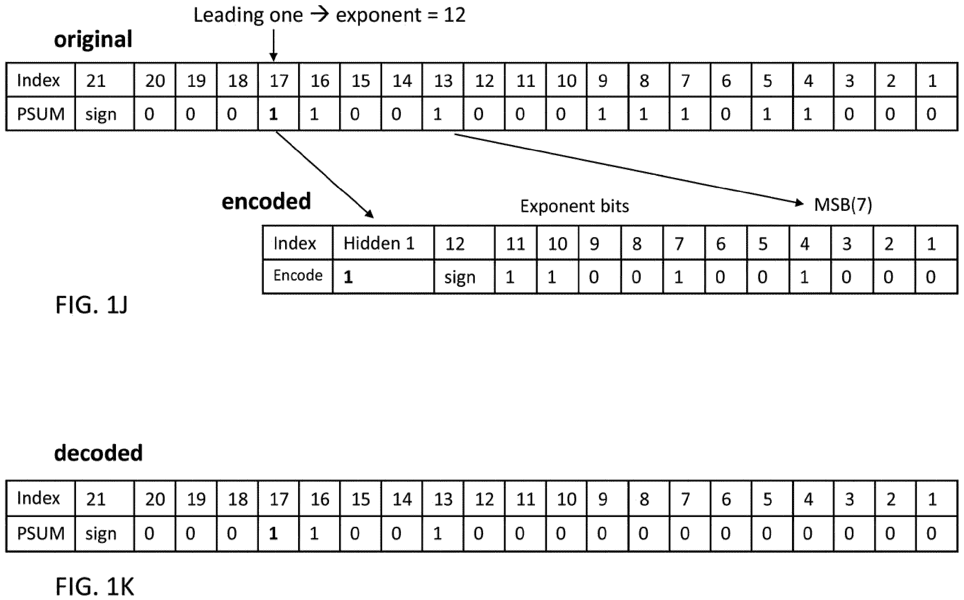

FIG. 1J illustrates the encoding to the P12M8 representation for an integer having the magnitude shown (e.g., for a partial sum with the absolute value shown). The encoding process is unaffected by the sign bit, which is simply copied from the sign bit of the sign and magnitude representation into the sign bit of the P12M8 representation. In the example of FIG. 1J, the leading 1 of the 17 bit integer becomes the implicit 1 (or "hidden 1") of the P12M8 representation, and the following 7 most significant bits of the 17-bit integer become the 7 remaining bits of the 8-bit mantissa of the P12M8 representation (which includes the implicit 1). The exponent value of 12 (binary 1100) is calculated as explained above, with the exponent difference being 3. FIG. 1K shows the result that is obtained if the P12M8 representation is converted, or "decoded" back to an integer representation; it may be seen that the values of bits 1 through 9 (which were discarded during the encoding process) are all zero. As such, the encoding error is the value, in the original integer representation, of the 9-bit integer consisting of the 9 least significant bits of the original integer.

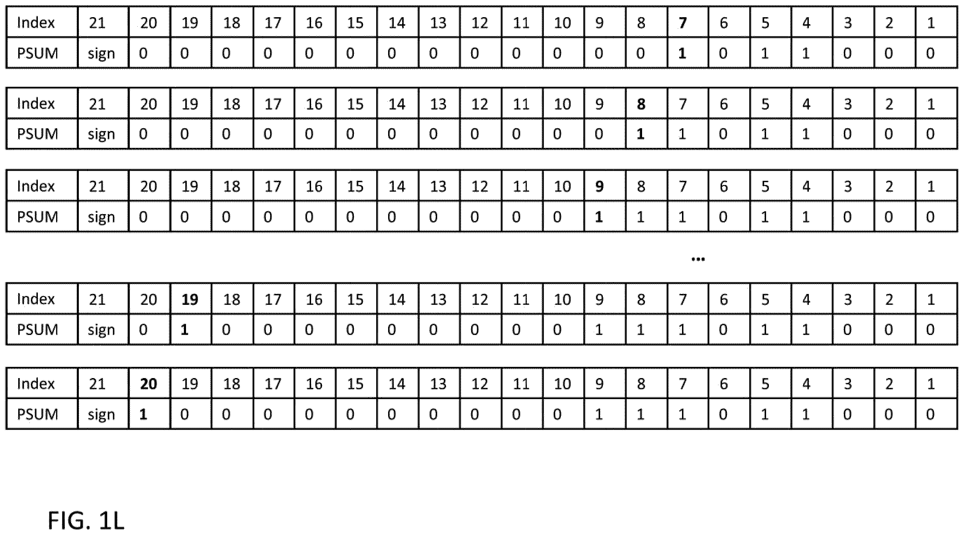

Fig. 1L shows five additional examples of integers that may be converted to a P12M8 representation. The five integers have (from top to bottom) 7 bits (i.e., a leading 1 in the 7th bit position), 8 bits, 9 bits, 19 bits, and 20 bits, respectively, and may be encoded based on the corresponding rows of the table of FIG. 1I.

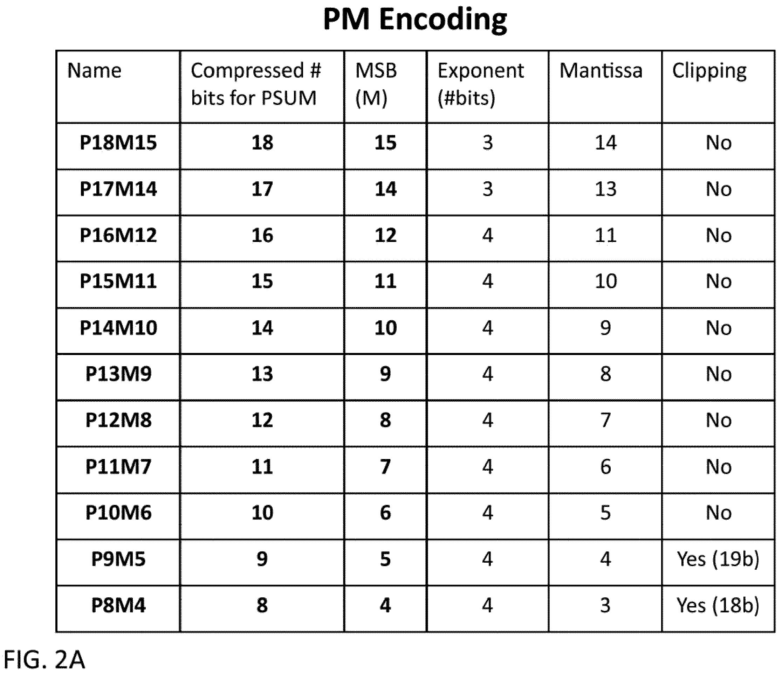

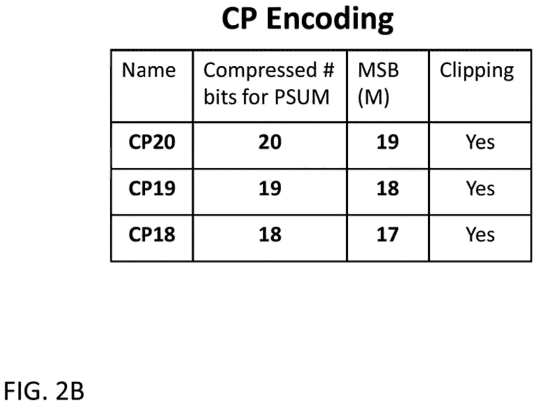

FIGs. 2A and 2B show various possibilities for encoding variants that may be employed in a ResNet50 (21 bit) neural network.

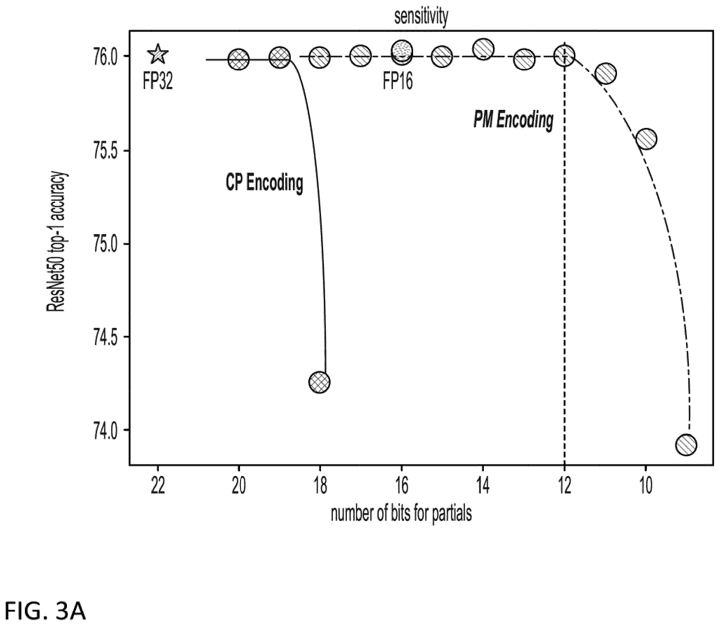

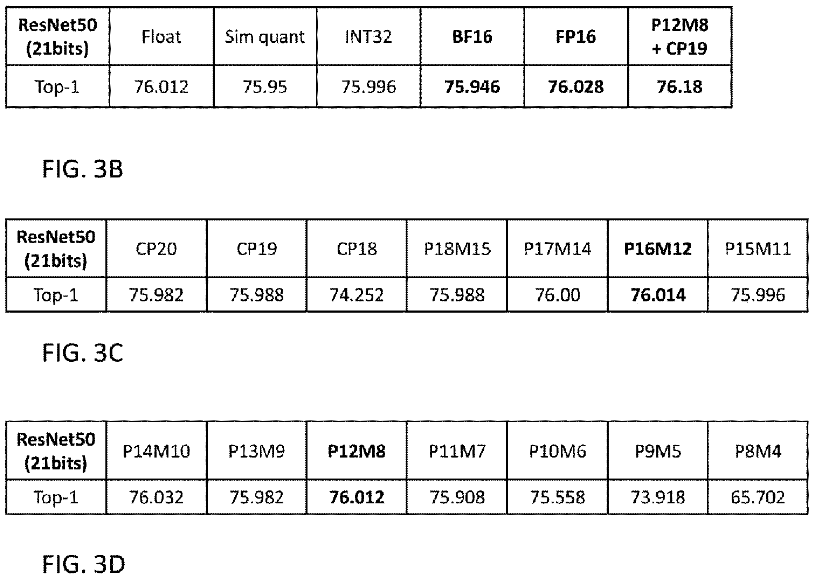

FIGs. 3A - 3D show results of performance tests, done with various encoding methods, involving classification of images by a ResNet50 neural network. FIG. 3A shows the top-1 accuracy (which is the rate at which the description, of the image being classified, that is identified by the neural network as the best match is correct) as a function of the number of bits used by the encoded representation to store each partial sum. It may be seen that PM encoding is able to avoid a performance degradation with as few bits as 12 (for P12M8). FIGs. 3B - 3D shows the performance results in tabular form. It may be seen that PM encoding enables the compression of partial sums down to 12 bits without a significant accuracy penalty. Each of BF16 encoding and FP16 encoding preserves the accuracy of the neural network, whereas CP encoding leads to a significant loss of accuracy beyond 18 bits. PM and CP encoding are orthogonal and may be combined; e.g., when a partial sum exceeds the limit number, then the encoding may involve using the encoded limit number (along with the sign bit of the original integer) as the encoded value.

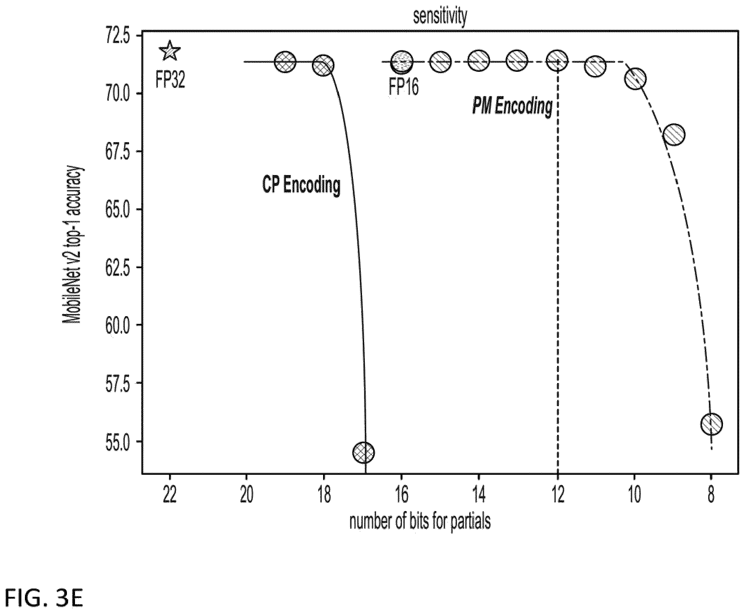

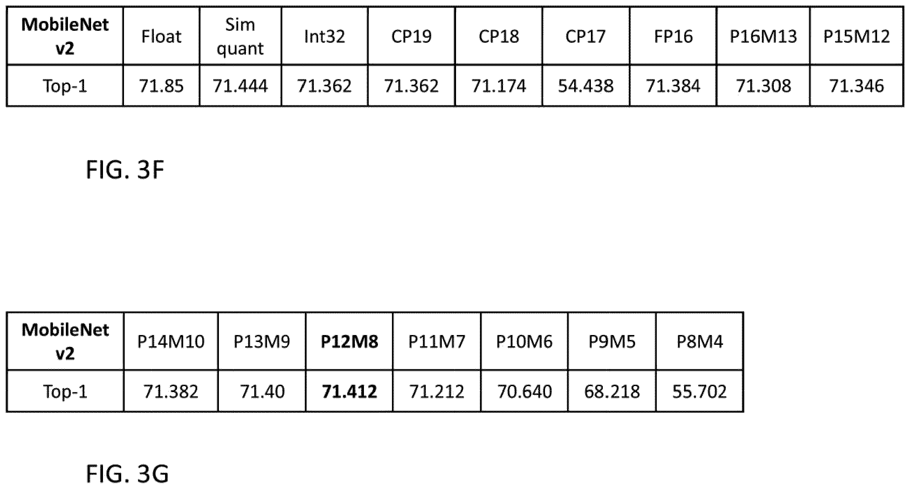

FIGs. 3E - 3G similarly show results of performance tests, done with various encoding methods, involving classification of images by a MobileNet v2 neural network (with FIG. 3E showing the results in graphical form, and FIGs. 3F and 3G showing the results in tabular form). From these tests it also may be seen that the use of a P12M8 representation for encoding of the partial sums results in no significant loss of performance.

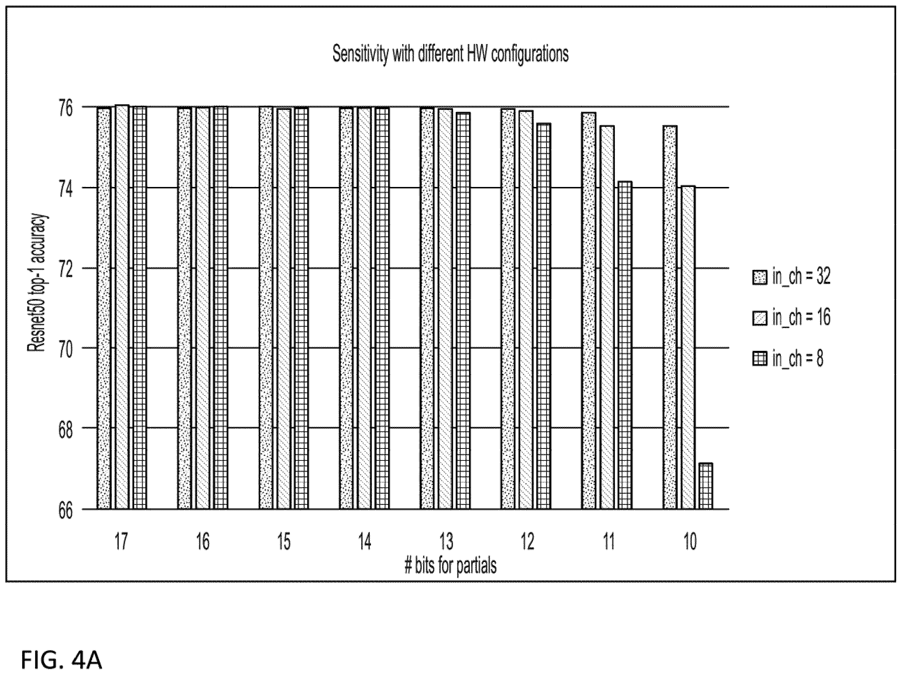

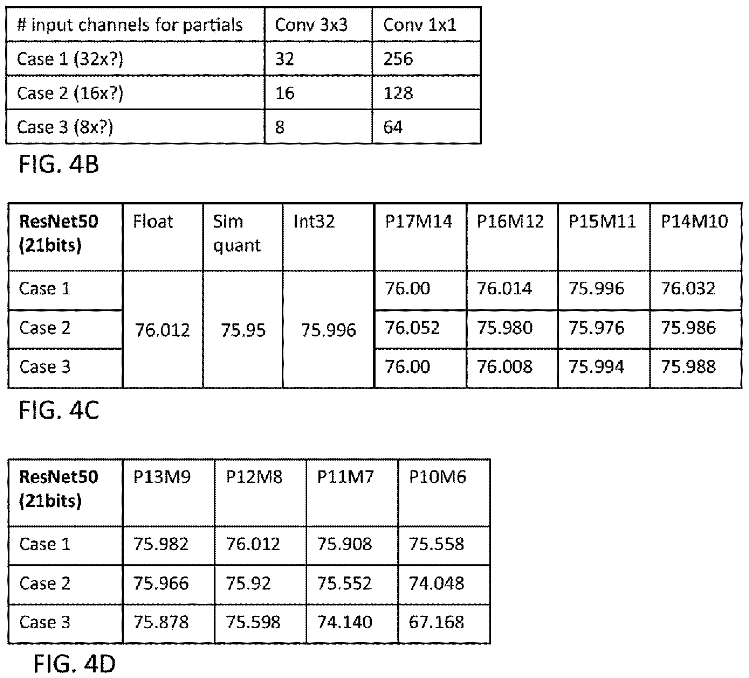

FIGs. 4A - 4D show results of performance tests, done with various encoding methods and different numbers of input channels, involving classification of images by a ResNet50 neural network. The number of input channels (e.g., 32, 16, or 8 in FIGs. 4A - 4D) may correspond to the number of products that are summed to form each partial sum. It may be seen that for a smaller number of input channels, the performance of the neural network degrades earlier as the number of bits of the representation used to store the partial sum decreases.

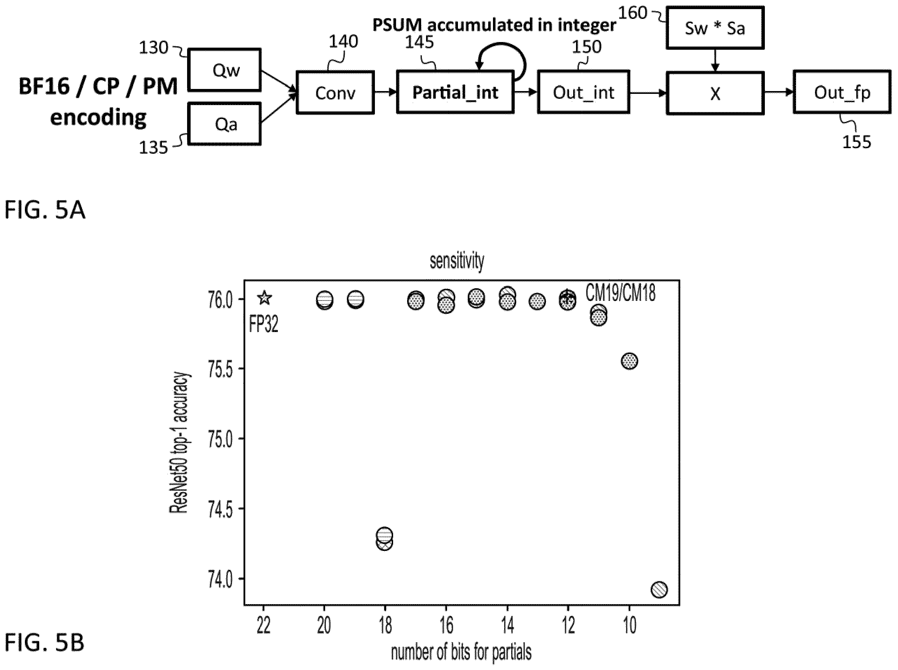

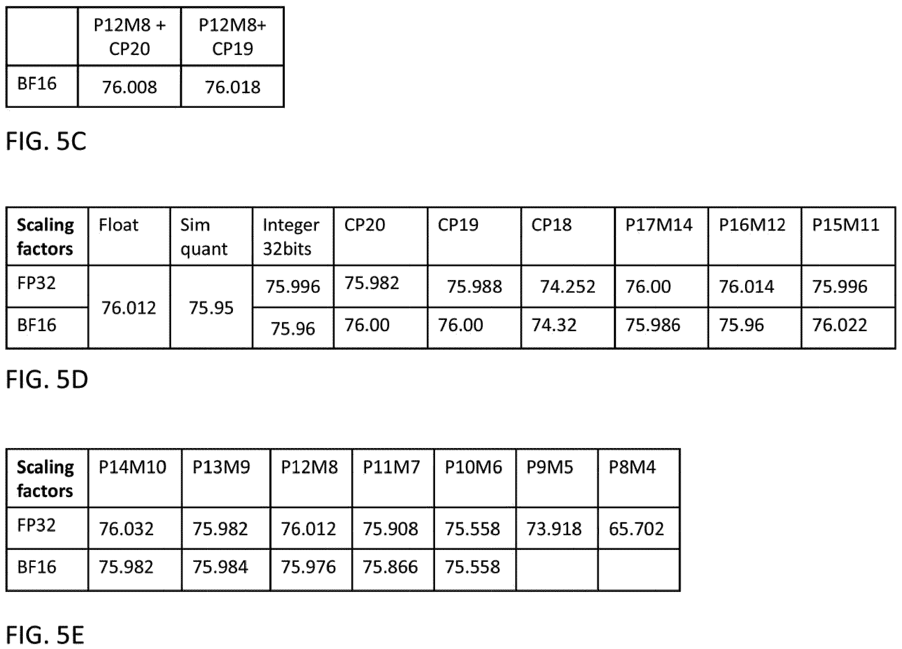

In some non-claimed embodiments, the scaling factor may also be encoded to reduce bandwidth and storage requirements. FIG. 5A shows a data flow in which the scaling factor, which is the product Sw*Sa, may be encoded. FIGs. 5B - 5E show results of performance tests, done with various encoding methods for the scaling factor, involving classification of images by a ResNet50 neural network (with FIG. 5B showing the results in graphical form, and FIGs. 5C - 5E showing the results in tabular form). It may be seen that encoding the scaling factor from FP32 to BF16 (which reduces storage requirements by a factor of 2) does not produce a significant performance degradation for various encoding methods that may be used for the partial sums.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least $(1-Y/100)$ times the first number and the second number is at most $(1+Y/100)$ times the first number. As used herein, the term "or" should be interpreted as "and/or", such that, for example, "A or B" means any one of "A" or "B" or "A and B".

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

## Claims

1. A computer-implemented method, comprising:

    performing a neural network inference operation, the performing of the neural network inference operation comprising:

        calculating (140) a first plurality of products, each of the first plurality of products being the product of a weight (130) and an activation (135);
        calculating (145, 150) a first partial sum, the first partial sum being the sum of the first plurality of products; and
        compressing (155, 160) the first partial sum to form a first compressed partial sum,

    wherein the first compressed partial sum comprises an exponent and a mantissa,
    wherein the first partial sum is an integer,
    wherein the first compressed partial sum is represented by PkMn being a representation with an unaffected sign bit, k-n exponent bits, and n-1 bits storing the mantissa excluding an implicit 1, and the exponent is an (k-n)-bit integer equal to $2^{(k-n)}-1$ less an exponent difference, wherein the exponent difference is the difference between the bit position of the leading 1 in a limit number being the largest integer to be encoded and the bit position of the leading 1 in the first partial sum, and
    wherein the leading 1 in the first partial sum becomes the implicit 1 in the PkMn representation and the following (n-1) most significant bits in the first partial sum become the (n-1) bits storing the mantissa excluding the implicit 1.

2. The computer-implemented method of claim 1, wherein k-n = 4.

3. The computer-implemented method of claim 2, wherein:
   the mantissa is a 7-bit number excluding the implicit 1.

4. The computer-implemented method of any one of claims 1 to 3, wherein:

    the first partial sum is greater than the limit number, and
    the mantissa of the first compressed partial sum equals a mantissa of the limit number.

5. The computer-implemented method of any one of claims 1 to 4, wherein the performing of the neural network inference operation further comprises:

    calculating a second plurality of products, each of the second plurality of products being the product of a weight and an activation;
    calculating a second partial sum, the second partial sum being the sum of the second plurality of products; and
    compressing the second partial sum to form a second compressed partial sum.

6. The computer-implemented method of claim 5, further comprising adding the first compressed partial sum and the second compressed partial sum.

**7.** A system, including:

a processing circuit configured to perform a neural network inference operation, and
wherein the performing of the neural network inference operation includes:

calculating (140) a first plurality of products, each of the first plurality of products being the product of a weight (130) and an activation (135);
calculating (145, 150) a first partial sum, the first partial sum being the sum of the first plurality of products; and
compressing (155, 160) the first partial sum to form a first compressed partial sum,

wherein the first compressed partial sum comprises an exponent and a mantissa,
wherein the first partial sum is an integer, and
wherein the first compressed partial sum is represented by PkMn being a representation with an unaffected sign bit, k-n exponent bits, and n-1 bits storing the mantissa excluding an implicit 1, and the exponent is an (k-n)-bit integer equal to $2^{(k-n)}$-1 less an exponent difference, wherein the exponent difference is the difference between the bit position of the leading 1 in a limit number being the largest integer to be encoded and the bit position of the leading 1 in the first partial sum, and
wherein the leading 1 in the first partial sum becomes the implicit 1 in the PkMn representation and the following (n-1) most significant bits in the first partial sum become the (n-1) bits storing the mantissa excluding the implicit 1.

**Patentansprüche**

**1.** Computer-implementiertes Verfahren, das aufweist:

Ausführen eines neuronalen Netzwerkinferenzbetriebs, wobei das Ausführen des neuronalen Netzwerkinferenzbetriebs aufweist:

Berechnen (140) einer ersten Mehrzahl von Produkten, wobei jedes der ersten Mehrzahl von Produkten das Produkt eines Gewichts (130) und einer Aktivierung (135) ist;
Berechnen (145, 150) einer ersten Teilsumme, wobei die erste Teilsumme die Summe der ersten Mehrzahl von Produkten ist; und
Komprimieren (155, 160) der ersten Teilsumme, um eine erste komprimierte Teilsumme zu bilden,

wobei die erste komprimierte Teilsumme einen Exponenten und eine Mantisse aufweist,
wobei die erste Teilsumme ein Integer ist,
wobei die erste komprimierte Teilsumme durch PkMn dargestellt wird, das eine Darstellung mit einem unbeeinflussten Vorzeichenbit, k-n Exponentenbits und n-1 Bits ist, die die Mantisse unter Ausschluss einer impliziten 1 speichern, und der Exponent ein (k-n)-Bit Integer ist, der gleich $2^{(k-n)}$-1 abzüglich einer Exponentendifferenz ist, wobei die Exponentendifferenz die Differenz zwischen der Bitposition der führenden 1 in einer Grenzzahl, die der größte zu kodierende Integer ist, und der Bitposition der führenden 1 in der ersten Teilsumme ist, und
wobei die führende 1 in der ersten Teilsumme die implizite 1 in der PkMn Darstellung wird und die folgenden (n-1) höchstwertigen Bits in der ersten Teilsumme die (n-1) Bits werden, die die Mantisse mit Ausnahme der impliziten 1 speichern.

**2.** Computerimplementiertes Verfahren nach Anspruch 1, wobei k-n = 4.

**3.** Computerimplementiertes Verfahren nach Anspruch 2, wobei:
die Mantisse eine 7-Bit-Zahl ohne die implizite 1 ist.

**4.** Computerimplementiertes Verfahren nach einem der Ansprüche 1 bis 3, wobei:

die erste Teilsumme größer als die Grenzzahl ist, und
die Mantisse der ersten komprimierten Teilsumme gleich einer Mantisse der Grenzzahl ist.

**5.** Computerimplementiertes Verfahren nach einem der Ansprüche 1 bis 4, wobei das Ausführen des neuronalen Netzwerkinferenzbetriebs ferner aufweist:

Berechnen einer zweiten Mehrzahl von Produkten, wobei jedes der zweiten Mehrzahl von Produkten das Produkt eines Gewichts und einer Aktivierung ist;
Berechnen einer zweiten Teilsumme, wobei die zweite Teilsumme die Summe der zweiten Mehrzahl von Produkten ist; und
Komprimieren der zweiten Teilsumme, um eine zweite komprimierte Teilsumme zu bilden.

**6.** Computerimplementiertes Verfahren nach Anspruch 5, ferner aufweisend Addieren der ersten komprimierten Teilsumme und der zweiten komprimierten Teilsumme auf.

**7.** System aufweisend:

eine Verarbeitungsschaltung, die so konfiguriert ist, dass sie einen neuronalen Netzwerkinferenzbetrieb ausführt, und
wobei Ausführen des neuronalen Netzwerkinferenzbetrieb enthält:

Berechnen (140) einer ersten Mehrzahl von Produkten, wobei jedes der ersten Mehrzahl von Produkten das Produkt eines Gewichts (130) und einer Aktivierung (135) ist;
Berechnen (145, 150) einer ersten Teilsumme, wobei die erste Teilsumme die Summe der ersten Mehrzahl von Produkten ist; und
Komprimieren (155, 160) der ersten Teilsumme, um eine erste komprimierte Teilsumme zu bilden,

wobei die erste komprimierte Teilsumme einen Exponenten und eine Mantisse aufweist,
wobei die erste Teilsumme ein Integer ist,
wobei die erste komprimierte Teilsumme durch PkMn dargestellt wird, das eine Darstellung mit einem unbeeinflussten Vorzeichenbit, k-n Exponentenbits und n-1 Bits ist, die die Mantisse unter Ausschluss einer impliziten 1 speichern, und der Exponent ein (k-n)-Bit Integer ist, der gleich $2^{(k-n)}-1$ abzüglich einer Exponentendifferenz ist, wobei die Exponentendifferenz die Differenz zwischen der Bitposition der führenden 1 in einer Grenzzahl, die der größte zu kodierende Integer ist, und der Bitposition der führenden 1 in der ersten Teilsumme ist, und
wobei die führende 1 in der ersten Teilsumme die implizite 1 in der PkMn Darstellung wird und die folgenden (n-1) höchstwertigen Bits in der ersten Teilsumme die (n-1) Bits werden, die die Mantisse mit Ausnahme der impliziten 1 speichern.

## Revendications

1. Procédé mis en oeuvre par ordinateur, le procédé comprenant:

l'exécution d'une opération d'inférence de réseau neuronal, l'exécution de l'opération d'inférence de réseau neuronal comprenant:

le calcul (140) d'une première pluralité de produits, chacun de la première pluralité de produits étant le produit d'un poids (130) et d'une activation (135);

le calcul (145, 150) d'une première somme partielle, la première somme partielle étant la somme de la première pluralité de produits; et
la compression (155, 160) de la première somme partielle pour former une première somme partielle comprimée,
dans lequel la première somme partielle comprimée comprend un exposant et une mantisse,
dans lequel la première somme partielle est un nombre entier,
dans lequel la première somme partielle comprimée est représentée par PkMn étant une représentation avec un bit de signe non affecté, k-n bits d'exposant et n-1 bits stockant la mantisse excluant un 1 implicite, et l'exposant est un nombre entier de (k-n) bits égal à $2^{(k-n)}-1$ moins une différence d'exposant, dans lequel la différence d'exposant est la différence entre la position de bit du 1 de tête dans un nombre limite étant le nombre entier le plus grand à encoder et la position de bit du 1 de tête dans la première somme partielle, et
dans lequel le 1 de tête dans la première somme partielle devient le 1 implicite dans la représentation PkMn et les (n-1) bits les plus significatifs suivants de la première somme partielle deviennent les (n-1) bits stockant la mantisse excluant le 1 implicite.

2. Procédé mis en oeuvre par ordinateur de la revendication 1, dans lequel k-n = 4.

3. Procédé mis en oeuvre par ordinateur de la revendication 2, dans lequel:
la mantisse est un nombre de 7 bits excluant le 1 implicite.

4. Procédé mis en oeuvre par ordinateur de l'une quelconque des revendications 1 à 3, dans lequel:

la première somme partielle est supérieure au nombre limite, et
la mantisse de la première somme partielle comprimée est égale à la mantisse du nombre limite.

5. Procédé mis en oeuvre par ordinateur de l'une quelconque des revendications 1 à 4, dans lequel l'exécution de l'opération d'inférence de réseau neuronal comprend en outre:

le calcul d'une deuxième pluralité de produits, chacun de la deuxième pluralité de produits étant le produit d'un poids et d'une activation;
le calcul d'une deuxième somme partielle, la deuxième somme partielle étant la somme de la deuxième pluralité de produits; et
la compression de la deuxième somme partielle pour former une deuxième somme partielle comprimée.

6. Procédé mis en oeuvre par ordinateur de la revendication 5, comprenant en outre l'addition de la première somme partielle comprimée et de la deuxième somme partielle comprimée.

7. Système comprenant

un circuit de traitement configuré pour exécuter une opération d'inférence de réseau neuronal, et
dans lequel l'exécution de l'opération d'inférence du réseau neuronal comprend:

le calcul (140) d'une première pluralité de produits, chacun de la première pluralité de produits étant le produit d'un poids (130) et d'une activation (135);
le calcul (145, 150) d'une première somme partielle, la première somme partielle étant la somme de la première pluralité de produits; et
la compression (155, 160) de la première somme partielle pour former une première somme partielle comprimée,
dans lequel la première somme partielle comprimée comprend un exposant et une mantisse,
dans lequel la première somme partielle est un nombre entier, et
dans lequel la première somme partielle comprimée est représentée par PkMn étant une représentation avec un bit de signe non affecté, k-n bits d'exposant et n-1 bits stockant la mantisse excluant un 1 implicite, et l'exposant est un nombre entier de (k-n) bits égal à 2(k-n)-1 moins une différence d'exposant, dans lequel la différence d'exposant est la différence entre la position de bit du 1 de tête dans un nombre limite étant le nombre entier le plus grand à encoder et la position de bit du 1 de tête dans la première somme partielle, et
dans lequel le 1 de tête dans la première somme partielle devient le 1 implicite dans la représentation PkMn et les (n-1) bits les plus significatifs suivants de la première somme partielle deviennent les (n-1) bits stockant la mantisse excluant le 1 implicite.

FIG. 1A

FIG. 1B

FP16 encoding

Qw 130

Qa 135

140
Conv

Partial_int

Sw, Sa 160

X

Partial_fp16

**PSUM accumulated in FP16**

Out_fp 155

FIG. 1C

EP 4 109 341 B1

12

FIG. 1D

P16M12

sign | exponent (4 bit) | fraction (11 bit)

| 0 | 0 | 0 | 0 | 0 | 0 | 1 | 0 | 0 | 0 | 0 | 0 | 0 | 0 | 0 | 0 |

FIG. 1E

| Index | 21 | **20** | 19 | 18 | 17 | 16 | 15 | 14 | 13 | 12 | 11 | 10 | 9 | 8 | 7 | 6 | 5 | 4 | 3 | 2 | 1 |
|---|---|---|---|---|---|---|---|---|---|---|---|---|---|---|---|---|---|---|---|---|---|
| PSUM | Sign | **1** | 1 | 1 | 1 | 1 | 0 | 0 | 1 | 0 | 0 | 0 | 1 | 1 | 1 | 0 | 1 | 1 | 0 | 0 | 1 |

## FIG. 1F

| Index | 19 | 18 | 17 | 16 | 15 | 14 | 13 | 12 | 11 | 10 | 9 | 8 | 7 | 6 | 5 | 4 | 3 | 2 | 1 |
|---|---|---|---|---|---|---|---|---|---|---|---|---|---|---|---|---|---|---|---|
| PSUM | sign | 1 | 1 | 1 | 1 | 1 | 1 | 1 | 1 | 1 | 1 | 1 | 1 | 1 | 1 | 1 | 1 | 1 | 1 |

## FIG. 1G

| Index | 21 | 20 | 19 | 18 | 17 | 16 | 15 | 14 | 13 | 12 | 11 | 10 | 9 | 8 | 7 | 6 | 5 | 4 | 3 | 2 | 1 |
|---|---|---|---|---|---|---|---|---|---|---|---|---|---|---|---|---|---|---|---|---|---|
| PSUM | sign | 0 | 0 | 1 | 1 | 1 | 1 | 1 | 1 | 1 | 1 | 1 | 1 | 1 | 1 | 1 | 1 | 1 | 1 | 1 | 1 |

## FIG. 1H

EP 4 109 341 B1

| # bits abs(PSUM) | exp | # LSB removed |
|---|---|---|
| 7 | 0 | 0 |
| 8 | 1 | 0 |
| 9 | 2 | 1 |
| ... | ... | ... |
| **17** | **12** | **9** |
| 18 | 13 | 10 |
| 19 | 14 | 11 |
| 20 | 15 | 12 |

FIG. 1I

original

Leading one → exponent = 12

| Index | 21 | 20 | 19 | 18 | 17 | 16 | 15 | 14 | 13 | 12 | 11 | 10 | 9 | 8 | 7 | 6 | 5 | 4 | 3 | 2 | 1 |
|-------|------|----|----|----|----|----|----|----|----|----|----|----|----|----|----|----|----|----|----|----|----|
| PSUM | sign | 0 | 0 | 0 | **1** | 1 | 0 | 0 | 1 | 0 | 0 | 0 | 1 | 1 | 1 | 0 | 1 | 1 | 0 | 0 | 0 |

encoded

Exponent bits    MSB(7)

| Index | Hidden 1 | 12 | 11 | 10 | 9 | 8 | 7 | 6 | 5 | 4 | 3 | 2 | 1 |
|--------|----------|------|----|----|----|----|----|----|----|----|----|----|----|
| Encode | **1** | sign | 1 | 1 | 0 | 0 | 1 | 0 | 0 | 1 | 0 | 0 | 0 |

FIG. 1J

decoded

| Index | 21 | 20 | 19 | 18 | 17 | 16 | 15 | 14 | 13 | 12 | 11 | 10 | 9 | 8 | 7 | 6 | 5 | 4 | 3 | 2 | 1 |
|-------|------|----|----|----|----|----|----|----|----|----|----|----|----|----|----|----|----|----|----|----|----|
| PSUM | sign | 0 | 0 | 0 | **1** | 1 | 0 | 0 | 1 | 0 | 0 | 0 | 0 | 0 | 0 | 0 | 0 | 0 | 0 | 0 | 0 |

FIG. 1K

EP 4 109 341 B1

| Index | 21 | 20 | 19 | 18 | 17 | 16 | 15 | 14 | 13 | 12 | 11 | 10 | 9 | 8 | **7** | 6 | 5 | 4 | 3 | 2 | 1 |
|---|---|---|---|---|---|---|---|---|---|---|---|---|---|---|---|---|---|---|---|---|---|
| PSUM | sign | 0 | 0 | 0 | 0 | 0 | 0 | 0 | 0 | 0 | 0 | 0 | 0 | **1** | 0 | 1 | 1 | 0 | 0 | 0 |

| Index | 21 | 20 | 19 | 18 | 17 | 16 | 15 | 14 | 13 | 12 | 11 | 10 | 9 | **8** | 7 | 6 | 5 | 4 | 3 | 2 | 1 |
|---|---|---|---|---|---|---|---|---|---|---|---|---|---|---|---|---|---|---|---|---|---|
| PSUM | sign | 0 | 0 | 0 | 0 | 0 | 0 | 0 | 0 | 0 | 0 | 0 | **1** | 1 | 0 | 1 | 1 | 0 | 0 | 0 |

| Index | 21 | 20 | 19 | 18 | 17 | 16 | 15 | 14 | 13 | 12 | 11 | 10 | **9** | 8 | 7 | 6 | 5 | 4 | 3 | 2 | 1 |
|---|---|---|---|---|---|---|---|---|---|---|---|---|---|---|---|---|---|---|---|---|---|
| PSUM | sign | 0 | 0 | 0 | 0 | 0 | 0 | 0 | 0 | 0 | 0 | **1** | 1 | 1 | 0 | 1 | 1 | 0 | 0 | 0 |

...

| Index | 21 | 20 | **19** | 18 | 17 | 16 | 15 | 14 | 13 | 12 | 11 | 10 | 9 | 8 | 7 | 6 | 5 | 4 | 3 | 2 | 1 |
|---|---|---|---|---|---|---|---|---|---|---|---|---|---|---|---|---|---|---|---|---|---|
| PSUM | sign | 0 | **1** | 0 | 0 | 0 | 0 | 0 | 0 | 0 | 0 | 0 | 1 | 1 | 1 | 0 | 1 | 1 | 0 | 0 | 0 |

| Index | 21 | **20** | 19 | 18 | 17 | 16 | 15 | 14 | 13 | 12 | 11 | 10 | 9 | 8 | 7 | 6 | 5 | 4 | 3 | 2 | 1 |
|---|---|---|---|---|---|---|---|---|---|---|---|---|---|---|---|---|---|---|---|---|---|
| PSUM | sign | **1** | 0 | 0 | 0 | 0 | 0 | 0 | 0 | 0 | 0 | 0 | 1 | 1 | 1 | 0 | 1 | 1 | 0 | 0 | 0 |

FIG. 1L

EP 4 109 341 B1

# PM Encoding

| Name | Compressed # bits for PSUM | MSB (M) | Exponent (#bits) | Mantissa | Clipping |
|---|---|---|---|---|---|
| P18M15 | 18 | 15 | 3 | 14 | No |
| P17M14 | 17 | 14 | 3 | 13 | No |
| P16M12 | 16 | 12 | 4 | 11 | No |
| P15M11 | 15 | 11 | 4 | 10 | No |
| P14M10 | 14 | 10 | 4 | 9 | No |
| P13M9 | 13 | 9 | 4 | 8 | No |
| P12M8 | 12 | 8 | 4 | 7 | No |
| P11M7 | 11 | 7 | 4 | 6 | No |
| P10M6 | 10 | 6 | 4 | 5 | No |
| P9M5 | 9 | 5 | 4 | 4 | Yes (19b) |
| P8M4 | 8 | 4 | 4 | 3 | Yes (18b) |

FIG. 2A

# CP Encoding

| Name | Compressed # bits for PSUM | MSB (M) | Clipping |
|------|----------------------------|---------|----------|
| **CP20** | **20** | **19** | Yes |
| **CP19** | **19** | **18** | Yes |
| **CP18** | **18** | **17** | Yes |

FIG. 2B

EP 4 109 341 B1

FIG. 3A

EP 4 109 341 B1

| ResNet50 (21bits) | Float | Sim quant | INT32 | BF16 | FP16 | P12M8 + CP19 |
|---|---|---|---|---|---|---|
| Top-1 | 76.012 | 75.95 | 75.996 | **75.946** | **76.028** | **76.18** |

FIG. 3B

| ResNet50 (21bits) | CP20 | CP19 | CP18 | P18M15 | P17M14 | **P16M12** | P15M11 |
|---|---|---|---|---|---|---|---|
| Top-1 | 75.982 | 75.988 | 74.252 | 75.988 | 76.00 | **76.014** | 75.996 |

FIG. 3C

| ResNet50 (21bits) | P14M10 | P13M9 | **P12M8** | P11M7 | P10M6 | P9M5 | P8M4 |
|---|---|---|---|---|---|---|---|
| Top-1 | 76.032 | 75.982 | **76.012** | 75.908 | 75.558 | 73.918 | 65.702 |

FIG. 3D

EP 4 109 341 B1

FIG. 3E

| MobileNet v2 | Float | Sim quant | Int32 | CP19 | CP18 | CP17 | FP16 | P16M13 | P15M12 |
|---|---|---|---|---|---|---|---|---|---|
| Top-1 | 71.85 | 71.444 | 71.362 | 71.362 | 71.174 | 54.438 | 71.384 | 71.308 | 71.346 |

FIG. 3F

EP 4 109 341 B1

| MobileNet v2 | P14M10 | P13M9 | **P12M8** | P11M7 | P10M6 | P9M5 | P8M4 |
|---|---|---|---|---|---|---|---|
| Top-1 | 71.382 | 71.40 | **71.412** | 71.212 | 70.640 | 68.218 | 55.702 |

FIG. 3G

FIG. 4A

| # input channels for partials | Conv 3x3 | Conv 1x1 |
|---|---|---|
| Case 1 (32x?) | 32 | 256 |
| Case 2 (16x?) | 16 | 128 |
| Case 3 (8x?) | 8 | 64 |

FIG. 4B

| ResNet50 (21bits) | Float | Sim quant | Int32 | P17M14 | P16M12 | P15M11 | P14M10 |
|---|---|---|---|---|---|---|---|
| Case 1 | | | | 76.00 | 76.014 | 75.996 | 76.032 |
| Case 2 | 76.012 | 75.95 | 75.996 | 76.052 | 75.980 | 75.976 | 75.986 |
| Case 3 | | | | 76.00 | 76.008 | 75.994 | 75.988 |

FIG. 4C

| ResNet50 (21bits) | P13M9 | P12M8 | P11M7 | P10M6 |
|---|---|---|---|---|
| Case 1 | 75.982 | 76.012 | 75.908 | 75.558 |
| Case 2 | 75.966 | 75.92 | 75.552 | 74.048 |
| Case 3 | 75.878 | 75.598 | 74.140 | 67.168 |

FIG. 4D

**FIG. 5A**

**FIG. 5B**

| | P12M8 + CP20 | P12M8+ CP19 |
|---|---|---|
| BF16 | 76.008 | 76.018 |

FIG. 5C

| Scaling factors | Float | Sim quant | Integer 32bits | CP20 | CP19 | CP18 | P17M14 | P16M12 | P15M11 |
|---|---|---|---|---|---|---|---|---|---|
| FP32 | 76.012 | 75.95 | 75.996 | 75.982 | 75.988 | 74.252 | 76.00 | 76.014 | 75.996 |
| BF16 | | | 75.96 | 76.00 | 76.00 | 74.32 | 75.986 | 75.96 | 76.022 |

FIG. 5D

| Scaling factors | P14M10 | P13M9 | P12M8 | P11M7 | P10M6 | P9M5 | P8M4 |
|---|---|---|---|---|---|---|---|
| FP32 | 76.032 | 75.982 | 76.012 | 75.908 | 75.558 | 73.918 | 65.702 |
| BF16 | 75.982 | 75.984 | 75.976 | 75.866 | 75.558 | | |

FIG. 5E

EP 4 109 341 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020264876 A1

**Non-patent literature cited in the description**

- A Survey of Quantization Methods for Efficient Neural Network Inference. **AMIR GHOLAMI et al.** ARXIV.ORG. CORNELL UNIVERSITY LIBRARY, 22 April 2021